# EUROPÄISCHE PATENTANMELDUNG

(11) **EP 2 014 953 A2**
(43) Veröffentlichungstag der Anmeldung: **14.01.2009**
(21) Anmeldenummer: 08159323.8
(22) Anmeldetag: 30.06.2008
(51) Int. Cl.: F16H 45/02

(54) **Hydrodynamische Kopplungsanordnung**

(30) Priorität: 13.07.2007 DE 102007032692
(71) Anmelder: ZF Friedrichshafen AG, 88038 Friedrichshafen (DE)
(72) Erfinder: Wack, Erwin, 97464, Niederwerrn (DE); Walter, Thomas, 97509, Kolitzheim (DE); Krüger, Thomas, 12683, Berlin (DE)

(57) **Zusammenfassung**

Eine hydrodynamische Kopplungsanordnung ist mit einem um eine Drehachse drehbaren Kupplungsgehäuse ausgebildet, innerhalb welchem zumindest ein durch wenigstens ein Pumpen- und ein Turbinenrad gebildeter hydrodynamischer Kreis sowie zumindest ein Kupplungsraum vorgesehen ist, der eine Überbrückungskupplung sowie einen Torsionsschwingungsdämpfer aufnimmt. Der Torsionsschwingungsdämpfer verfügt über eine Führungsvorrichtung zur Abstützung wenigstens eines Energiespeichers der Dämpfungseinrichtung nach radial außen. Die Führungsvorrichtung des Torsionsschwingungsdämpfers ist als Strömungsleiteinrichtung ausgebildet, durch welche bevorzugt im Kupplungsraum enthaltenes, von der Überbrückungskupplung anströmendes fluidförmiges Medium zum hydrodynamischen Kreis umlenkbar ist.

## Beschreibung

Die Erfindung betrifft eine hydrodynamische Kopplungsanordnung gemäß dem Oberbegriff des Anspruches 1.

Eine derartige hydrodynamische Kopplungsanordnung, aus der DE 103 58 902 A1 bekannt, dient zur Herstellung oder zur Aufhebung einer Wirkverbindung zwischen einem Antrieb, wie der Kurbelwelle einer Brennkraftmaschine, und einem Abtrieb, wie einer Getriebeeingangswelle, und ist mit einem um eine Drehachse rotierbaren Kupplungsgehäuse versehen. In der DE 103 58 902 A1 ist die Kopplungsanordnung als hydrodynamischer Drehmomentwandler ausgebildet, in welchem ein hydrodynamischer Kreis mit einem Pumpenrad, einem Turbinenrad und einem Leitrad vorgesehen ist. Darüber hinaus ist die hydrodynamische Kopplungsanordnung mit einer Überbrückungskupplung versehen, durch welche der hydrodynamische Kreis bei Momentenübertragungen vom Antrieb zum Abtrieb umgangen werden kann, wobei der Überbrückungskupplung ein Torsionsschwingungsdämpfer mit zwei Umfangsfedersätzen zur Dämpfung von Torsionsschwingungen zugeordnet ist.

Der in der DE 103 58 902 A1 gezeigte hydrodynamische Drehmomentwandler veranschaulicht eine bei hydrodynamischen Kopplungsanordnungen in jüngster Zeit häufig angewandte Entwicklungstendenz, wonach ein von Pumpen-, Turbinen-, und Leitrad umschlossener Torusraum zugunsten eines kompakten Bauraums der Kopplungsanordnung über begrenzte Abmessungen verfügt. Gleichzeitig erfordern eine große Dimensionierung der Überbrückungskupplung zur Übertragung hoher Drehmomente sowie ein leistungsfähiger und daher komplexer Torsionsschwingungsdämpfer erheblichen Bauraum in der Kopplungsanordnung.

Während längerer Stillstandszeiten eines die hydrodynamische Kopplungsanordnung aufnehmenden Kraftfahrzeugs verlässt ein nicht unerheblicher Teil des im Kupplungsgehäuse enthaltenen fluidförmigen Mediums das Kupplungsgehäuse, um in das zugeordnete Getriebe abzufließen. Wird daraufhin ein Neustart eingeleitet, verteilt sich das im Kupplungsgehäuse verbliebende, fluidförmige Medium zunächst fliehkraftbedingt innerhalb des Kupplungsgehäuses, so dass lediglich ein Teil dieses Mediums in den Torusraum gelangt, und dort zur Momentenübertragung verfügbar ist. Dieses Problem wird durch Einlegen der Stufe Drive (D) im Getriebe weiter verstärkt, da hierdurch der Antrieb zunächst mit vorbestimmter Drehzahl wirksam ist, der Abtrieb und somit der Torsionsschwingungsdämpfer dagegen zumindest im wesentlichen noch im Stillstand verharren, was trotz anliegender Fliehkraft zu einem Absaugen von fluidförmigem Medium durch den Torsionsschwingungsdämpfer nach radial innen führt Dies muss durch aus dem Torusraum nachgesaugtes fluidförmiges Medium ausgeglichen werden. Zwar wird während dieses Betriebszustandes aus einer Fluidbevorratung frisches fluidförmiges Medium über die geöffnete Überbrückungskupplung in das Kupplungsgehäuse eingeleitet, jedoch gelangt auch dieses Medium zunächst nicht in den Torusraum, sondern wird vielmehr ebenfalls nach radial innen abgesaugt. Diese Bedingungen äußern sich beim Anfahren des Fahrzeuges in einer Weise, dass der zumindest weitgehend entleerte Torusraum kaum zur Übertragung des vom Antrieb eingeleiteten Drehmomentes auf den Abtrieb befähigt ist. Einzig an der Überbrückungskupplung anliegende Schleppmomente vermögen eine Übertragung eines Restdrehmomentes sicher zu stellen. Erst mit langsam zunehmender, weiterer Befüllung des Kupplungsraums beginnt ein Übertritt frischen fluidförmigen Mediums in den Toruskreis und damit eine Befüllung desselben. Eine derartige Leistungscharakteristik ist bei einem modernen Kraftfahrzeug nicht tolerierbar.

Der Erfindung liegt die Aufgabe zugrunde, eine hydrodynamische Kopplungsanordnung derart auszubilden, dass bei einem Neustart eines Kraftfahrzeuges auch nach Ablauf einer Mindeststillstandszeit ein zufriedenstellend hoher Befüllstand im Kupplungsraum und damit eine hinreichende Drehmomentenübertragbarkeit sicher gestellt ist.

Diese Aufgabe wird durch die im Anspruch 1 angegebenen Merkmale gelöst.

Durch Ausbildung der Führungsvorrichtung des Torsionsschwingungsdämpfers als Strömungsleiteinrichtung besteht die Möglichkeit, im Kupplungsraum enthaltenes, beispielsweise von der Überbrückungskupplung anströmendes, fluidförmiges Medium gezielt zum hydrodynamischen Kreis umzulenken, und dadurch dessen Befüllungsgrad nach einem längeren Stillstand eines Kraftfahrzeuges rasch zu erhöhen. Selbstverständlich wird sich die Ausbildung der Führungsvorrichtung als Strömungsleiteinrichtung auch im Hinblick auf bereits im hydrodynamischen Kreis enthaltenes fluidförmiges Medium auswirken. Ein Teil dieses Mediums wird nämlich beim Übertritt von einem Pumpenrad der hydrodynamischen Kopplungsvorrichtung in ein Turbinenrad derselben unter Fliehkrafteinfluß über einen Axialspalt zwischen Pumpen- und Turbinenrad aus dem hydrodynamischen Kreis entweichen, um danach in Richtung zum Kupplungsraum abzuströmen. Aufgrund der erfindungsgemäßen Lösung wird diese Verlustströmung des hydrodynamischen Kreises entweder bereits vor Erreichen des Kupplungsraumes durch die von der Führungsvorrichtung ankommende Strömung in Richtung zum hydrodynamischen Kreis umgelenkt, oder aber die Verlustströmung gelangt zunächst in den Kupplungsraum, um anschließend gemeinsam mit der von der Überbrückungskupplung ankommenden Strömung in den hydrodynamischen Kreis weitergeleitet zu werden. Auf jeden Fall wird dadurch die Verlustströmung dazu beitragen, den Befüllungsgrad des hydrodynamischen Kreises rasch zu erhöhen.

Mit Vorzug verfügt die Führungsvorrichtung des Torsionsschwingungsdämpfers über zumindest eine Führungsschale für den wenigstens einen Energiespeicher, wobei die Führungsschale an Ihrer von der Überbrückungskupplung abgewandten Seite zumindest partiell wenigstens eine Ausnehmung aufweist. Diese Ausnehmung kann dann, wenn die Führungsschale an dieser Seite ansonsten verschlossen ist, als Durchlass für aus dem Kupplungsraum stammendes fluidförmiges Medium in den hydrodynamischen Kreis dienen, und wirkt mit einer an der der Überbrückungskupplung zugewandten Seite der Führungsschale vorgesehenen Öffnung, die zum Eintritt von aus der Überbrückungskupplung stammendem fluidförmigem Medium in den Torsionsschwingungsdämpfer vorgesehen ist, zusammen. Über die Öffnung in den Kupplungsraum, insbesondere hierbei in den Torsionsschwingungsdämpfer, eingetretenes fluidförmiges Medium gelangt auf diese Weise nach Durchgang durch den Torsionsschwingungsdämpfer zu der Ausnehmung, um über diese zum hydrodynamischen Kreis geleitet zu werden.

Mit Vorzug verfügt die Ausnehmung über eine Mehrzahl von in Umfangsrichtung in vorbestimmten Abständen zueinander angeordnete Durchgangsgruppen, wobei jede dieser Durchgangsgruppen jeweils eine Mehrzahl von in Umfangsrichtung in vorbestimmten Abständen zueinander angeordnete Durchgänge aufweist, die beispielsweise als Bohrungen ausgebildet sein können.

Alternativ hierzu kann die Führungsschale des Torsionsschwingungsdämpfers anstatt mit der vorgenannten Öffnung an ihrer der Überbrückungskupplung zugewandten Seite auch mit einer zumindest im wesentlichen geschlossenen Leitfläche ausgebildet sein. Diese Leitfläche bewirkt eine Umlenkung von aus der Überbrückungskupplung stammendem fluidförmigem Medium unter Umgehung des Torsionsschwingungsdämpfers in Richtung des hydrodynamischen Kreises, und ist mit Vorzug durch ein Deckblech einer Dämpfungseinrichtung des Torsionsschwingungsdämpfers gebildet, wobei dieses Deckblech wenigstens einen Energiespeicher der Dämpfungseinrichtung auf einem Teil entlang dessen Umfang umschließt.

Im Folgenden wird ein Ausführungsbeispiel für die Erfindung angegeben. Es zeigt im Einzelnen:
- Fig. 1: die obere Hälfte eines Längsschnittes durch ein einen hydrodynamischen Kreis sowie einen Torsionsschwingungsdämpfer enthaltendes Kupplungsgehäuse einer hydrodynamischen Kopplungsanordnung mit einem Strömungsweg für fluidförmiges Medium,
- Fig. 2: eine Herauszeichnung eines in Fig. 1 am Torsionsschwingungsdämpfer vorgesehenen Deckbleches,
- Fig.3: einen Ausschnitt aus Fig. 1, aber mit einem anderen Torsionsschwingungsdämpfer.

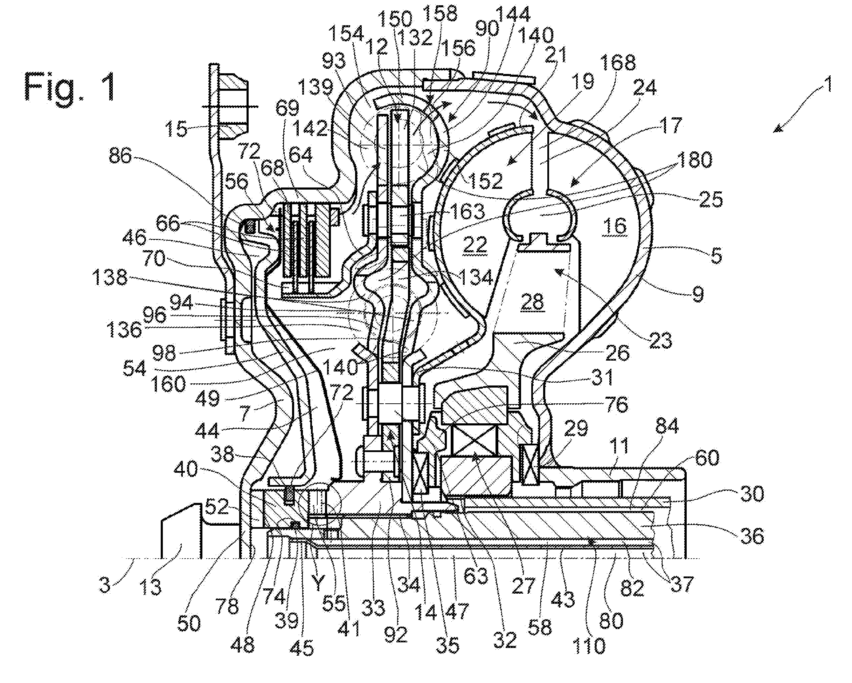

In Fig. 1 ist eine hydrodynamische Kopplungsanordnung 1 dargestellt, ausgebildet als hydrodynamischer Drehmomentwandler. Die hydrodynamische Kopplungsanordnung 1 weist ein Kupplungsgehäuse 5 auf, das um eine Drehachse 3 Rotationsbewegungen auszuführen vermag. Das Kupplungsgehäuse 5 verfügt an seiner einem nicht gezeigten Antrieb, wie beispielsweise einer Kurbelwelle einer Brennkraftmaschine, zugewandten Seite über eine antriebsseitige Gehäusewandung 7, die mit einer Pumpenradschale 9 fest verbunden ist. Diese geht im radial inneren Bereich in eine Pumpenradnabe 11 über.

Zurückkommend auf die antriebsseitige Gehäusewandung 7, weist diese an ihrer dem nicht gezeigten Antrieb zugewandten Seite einen Lagerzapfen 13 auf, der in bekannter und daher nicht näher dargestellter Weise an einem Element des Antriebs, wie beispielsweise der Kurbelwelle, zur antriebsseitigen Aufnahme des Kupplungsgehäuses 5 vorgesehen ist. Weiterhin verfügt die antriebsseitige Gehäusewandung 7 über eine Befestigungsaufnahme 15, die üblicherweise zur Befestigung des Kupplungsgehäuses 5 am Antrieb dient, und zwar vorzugsweise über eine nicht gezeigte Flexplatte. Bezüglich einer zeichnerischen Darstellung der Aufnahme des Lagerzapfens eines hydrodynamischen Kopplungselementes in einer Kurbelwelle eines Antriebs sowie einer Anbindung des hydrodynamischen Kopplungselementes über eine Flexplatte an die Kurbelwelle wird beispielhaft auf die DE 32 22 119 C1, Fig. 1 verwiesen.

Die bereits erwähnte Pumpenradschale 9 bildet zusammen mit Pumpenradschaufeln 16 ein Pumpenrad 17, das mit einem eine Turbinenradschale 21 sowie Turbinenradschaufeln 22 aufweisenden Turbinenrad 19 sowie mit einem Leitrad 23 zusammenwirkt. Pumpenrad 17, Turbinenrad 19 und Leitrad 23 bilden in bekannter Weise einen hydrodynamischen Kreis 24, der einen Innentorus 25 umschließt.

Erwähnt werden sollte weiterhin, dass Leitradschaufeln 28 des Leitrades 23 auf einer Leitradnabe 26 vorgesehen sind, die auf einem Freilauf 27 angeordnet ist. Der Letztgenannte stützt sich über eine Axiallagerung 29 an der Pumpenradnabe 11 axial ab und steht über eine Verzahnung 32 in drehfester, aber axial relativ verschiebbarer Verbindung mit einer Stützwelle 30, die radial innerhalb der Pumpenradnabe 11 angeordnet ist. Die als Hohlwelle ausgebildete Stützwelle 30 ihrerseits umschließt eine als Abtrieb 110 der hydrodynamischen Kopplungsvorrichtung 1 dienende Getriebeeingangswelle 36, die mit einer Mittenbohrung 37 versehen ist. Diese Mittenbohrung 37 nimmt eine Hülse 43 auf, und zwar derart, dass die Hülse 43 mittels Abstützbereichen 45 radial in der Mittenbohrung 37 zentriert ist. Mit Axialversatz zu diesen Abstützbereichen 45 bildet die Hülse 43 radial zwischen sich und der umschließenden Wand der Mittenbohrung 37 einen ersten Versorgungskanal 58 für fluidförmiges Medium, nachfolgend als Strömungsmittel bezeichnet, aus, der bei der vorliegenden Auslegung der hydrodynamischen Kopplungsanordnung 1 als Zuführung für das Strömungsmittel wirksam ist. Radial innerhalb der Hülse 43 verbleibt ein zentraler Versorgungskanal 47.

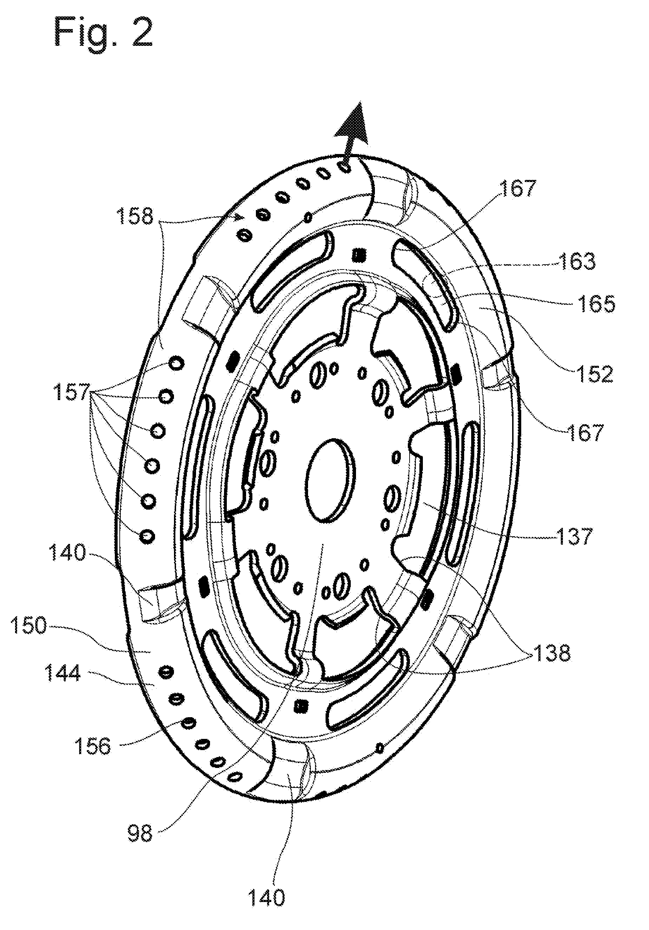

Die Getriebeeingangswelle 36 nimmt über eine Verzahnung 34 eine Nabe 33 drehfest, aber axial verschiebbar auf, wobei diese Nabe 33 in einem radial äußeren Bereich zur Befestigung einer abtriebsseitigen Nabenscheibe 92 dient. Diese Nabenscheibe 92 bildet einen Abtriebsteil 14 eines Torsionsschwingungsdämpfers 90, und wirkt über fingerförmig nach radial außen ragende Ansteuerelemente 134 auf Energiespeicher 136 eines radial inneren Umfangsfedersatzes 94, der sich anderenends an Ansteuerelementen 138 von Federfenstern 137 eines antriebsseitigen Deckbleches 96 sowie eines abtriebsseitigen Deckbleches 98 abstützt. Von diesen Deckblechen 96, 98, die ebenfalls Teile des Torsionsschwingungsdämpfers 90 sind, ist das abtriebsseitige Deckblech 98 als Einzelheit in Fig. 2 herausgezeichnet. Dieses Deckblech 98 dient zur Aufnahme eines Turbinenradfußes 31 mittels einer Nietverbindung 63.

Die Deckbleche 96 und 98 stehen außer mit dem radial inneren Umfangsfedersatz 94 auch mit einem radial äußeren Umfangsfedersatz 93 in Wirkverbindung, der ebenso wie der radial innere Umfangsfedersatz 94 Teil einer Dämpfungseinrichtung 180 des Torsionsschwinungsdämpfers 90 ist. Das antriebsseitige Deckblech 96 weist hierzu radial nach außen ragende, fingerförmige Ansteuerelemente 139 auf, während das abtriebsseitige Deckblech 98 über als Ansteuerelemente 140 wirksame Ausdrückungen (Fig. 2) verfügt. Die Ausformung der Ausdrückungen als Ansteuerelemente 140 ergibt sich durch die Gestaltung des abtriebsseitigen Deckbleches 98 im radial äußeren Bereich, in welchem das Deckblech 98 Energiespeicher 142 des Umfangsfedersatzes 93 entlang eines Teils des Umfangs der Energiespeicher 142 umgreift, und dadurch eine Führungsschale 144 für die Energiespeicher 142 bildet. Das antriebsseitige Deckblech 98 stützt durch Ausbildung als Führungsschale 144 zum einen die Energiespeicher 142 des radial äußeren Umfangsfedersatzes 93 unter drehzahlbedingter Fliehkraftwirkung nach radial außen ab, und bildet somit eine Führungsvorrichtung 150 des Torsionsschwingungsdämpfers 90 für diese Energiespeicher 142, und zum anderen dient es, zumindest im wesentlichen, als Abtrennung 152 zwischen dem hydrodynamischen Kreis 24 und einem den Torsionsschwingungsdämpfer 90 sowie eine Überbrückungskupplung 56, die als Lamellenkupplung ausgebildet ist, aufnehmenden Kupplungsraum 160. Im Gegensatz dazu ist das abtriebsseitige Deckblech 98 an seiner der Überbrückungskupplung 56 zugewandten Seite zumindest eine Öffnung 1 54 auf.

Die Führungsschale 144 des abtriebsseitigen Deckbleches 98 weist an ihrer von der Überbrückungskupplung 56 abgewandten Seite im radial äußeren Bereich Durchgänge 156 in Form von Bohrungen auf, wobei jeweils mehrere dieser Durchgänge 156 in Umfangsrichtung nebeneinander angeordnet sind, und zusammen jeweils eine Durchgangsgruppe 157 (Fig. 2) bilden. Im Zusammenwirken miteinander bilden die Durchgangsgruppen 157 gemeinsam eine Ausnehmung 158 in der Führungsschale 144.

Zurückkommend auf den radial äußeren Umfangsfedersatz 93, stützen sich dessen Energiespeicher 142 jeweils mit ihren von den Ansteuerelementen 139, 140 der Deckbleche 96, 98 abgewandten Seiten an einer antriebsseitigen Nabenscheibe 132 ab, welche zur Befestigung eines Innenlamellenträgers 64 der Überbrückungskupplung 56 vorgesehen ist. Die antriebsseitige Nabenscheibe 132 dient, gemeinsam mit dem Innenlamellenträger 64, als Eingangsteil 12 des Torsionsschwingungsdämpfers 90.

Zur Begrenzung der Relativdrehauslenkweite zwischen dem Eingangsteil 12 des Torsionsschwingungsdämpfers 90 und den Deckblechen 96, 98 ist am Eingangsteil 12 eine Nietverbindung 163 befestigt, die Nietdurchgänge 165 in den Deckblechen 96, 98 durchgreift. Die Nietdurchgänge 165 des abtriebsseitigen Deckbleches 98 sind in Fig. 2 gezeigt, und erstrecken sich in Umfangsrichtung. In Fig. 2 ist beispielhaft eine Vernietung 163 in Strichlinierung dargestellt, und lässt den Auslenkwinkel in Umfangsrichtung erkennen, bis die Vernietung das jeweilige umfangsseitige Ende 167 des zugeordneten Nietdurchganges 165 erreicht hat, um dann eine weitergehende Relativdrehauslenkweite zwischen dem Eingangsteil 12 und den Deckblechen 96, 98 zu vermeiden. In vergleichbarer Weise wirkt die bereits erwähnte Vernietung 63 zwischen den Deckblechen 96, 98 und dem Ausgangsteil 14 des Torsionsschwingungsdämpfers 90.

Die Überbrückungskupplung 56 verfügt sowohl über innere Kupplungselemente 66, die über eine am Innenlamellenträger 64 vorgesehene Verzahnung 70 drehfest mit demselben sind, als auch über äußere Kupplungselemente 68, die mit den inneren Kupplungselementen 68 in Wirkverbindung bringbar sind, wobei die äußeren Kupplungselemente 68 über eine als Außenlamellenträger 69 wirksame Verzahnung 72 mit der antriebsseitigen Wandung 7 und damit mit dem Kupplungsgehäuse 5 in Drehverbindung stehen. Die Überbrückungskupplung 56 ist mittels eines axial verlagerbaren Kolbens 54 ein- oder ausrückbar.

Wie Fig. 1 zeigt, kann zwischen dem Kolben 54 und dem Torsionsschwingungsdämpfer 90 eine Trennplatte 49 vorgesehen sein, die den Kupplungsraum 160 von einem axial durch den Kolben 54 und die Trennplatte 49 begrenzten Versorgungsraum 44 isoliert. An der von diesem Versorgungsraum 44 abgewandten Seite des Kolbens 54 ist, axial durch denselben sowie durch die antriebsseitige Gehäusewandung 7 begrenzt, ein Druckraum 46 vorgesehen. Der Kolben 54 ist im Kupplungsgehäuse 5 zentriert, und gegenüber demselben mittels einer Abdichtung 86 dichtend aufgenommen.

Die Nabe 33, die wegen der Aufnahme des Torsionsschwingungsdämpfers 90, sowie über denselben, mittelbar auch des Turbinenrades 19, nachfolgend als Trägernabe 33 bezeichnet ist, stützt sich einerseits über das Deckblech 98 und eine Lagerung 35, die als Axiallagerung ausgebildet ist, über eine Druckscheibe 76 am Freilauf 27 ab, und kann sich andererseits mit seinem der antriebsseitigen Wandung 7 zugewandten, einen Axiallagerungsbereich 48 bildenden Ende an einer Axialanlagefläche 50 der antriebsseitigen Gehäusewandung 7 axial abstützen, wobei sich diese Axialanlagefläche 50, ausgehend von der Drehachse 3 des Kupplungsgehäuses 5, nach radial außen erstreckt. Innerhalb des Erstreckungsbereiches dieser Axialanlagefläche 50 ist, ausgehend von der Gegenseite der antriebsseitigen Gehäusewandung 7 des Kupplungsgehäuses 5, der Lagerzapfen 13 befestigt.

Nach radial innen hin ist die Trägernabe 33 über eine in einer Dichtungsausnehmung 74 aufgenommenen Abdichtung 39 gegenüber der Getriebeeingangswelle 36 abgedichtet, nach radial außen durch eine in einer Dichtungsausnehmung 72 aufgenommenen Abdichtung 38 gegenüber dem Kolben 54 der Überbrückungskupplung 56. Durch diese beiden Abdichtungen 38, 39 werden Strömungsdurchlässe 52, welche die Trägernabe 33 an ihrem Axiallagerungsbereich 48 durchdringen und mit Vorzug als Nutungen 85 im Axiallagerungsbereich 48 ausgebildet sind, von anderen Strömungsdurchlässen 55, welche im axialen Erstreckungsbereich der Trägernabe 33 zwischen dem Kolben 54 und dem Torsionsschwingungsdämpfer 90 ausgebildet sind, getrennt. Die einen Strömungsdurchlässe 52 stehen mit dem zentralen Versorgungskanal 47 der Hülse 47, der als zentraler Strömungsweg 80 wirksam ist, in Strömungsverbindung, die anderen Strömungsdurchlässe 55 dagegen mit dem ersten Versorgungskanal 58 radial zwischen der Hülse 43 und der dieselbe umschließenden Wand der Mittenbohrung 37 der Getriebeeingangswelle 36, wobei dieser Versorgungskanal 58 als erster Strömungsweg 82 wirksam ist. Darüber hinaus ist ein zweiter Versorgungskanal 60 radial zwischen der Getriebeeingangswelle 36 und der Stützwelle 30 vorgesehen, der bei der vorliegenden Auslegung der hydrodynamischen Kopplungsanordnung 1 als Abführung für das Strömungsmittel wirksam ist, und als zweiter Strömungsweg 84 dient.

Der zentrale Strömungsweg 80 dient, über die Strömungsdurchlässe 52, zur Herstellung eines Überdruckes im Druckraum 46 gegenüber dem Versorgungsraum 44 und damit zur Druckbeaufschlagung des Kolbens 54 der Überbrückungskupplung 56 zum Einrücken, wodurch eine Reibverbindung zwischen den einzelnen Kupplungselementen 66, 68 hergestellt wird. Zur Erzeugung dieses Überdruckes im Druckraum 46 gegenüber dem Versorgungsraum 44 ist eine Verbindung des zentralen Strömungsweges 80 mit einer Steuervorrichtung und einem Hydraulikflüssigkeitsvorrat erforderlich. Weder die Steuervorrichtung noch der Hydraulikflüssigkeitsvorrat sind zeichnerisch dargestellt, können aber der Fig. 1 der DE 44 23 640 A1 entnommen werden, und sind daher als inhaltlich in die jetzt vorliegende Patentanmeldung aufgenommen zu betrachten.

Der erste Strömungsweg 82 dient, über die Verzahnung 34 und die Strömungsdurchlässe 55, zur Herstellung eines Überdruckes in dem Versorgungsraum 44 gegenüber dem Druckraum 46, und damit zur Druckbeaufschlagung des Kolbens 54 der Überbrückungskupplung 56 zum Ausrücken, wodurch die Reibverbindung zwischen den einzelnen Kupplungselementen 66, 68 gelöst wird. Zur Herstellung dieses Überdruckes im Versorgungsraum 44 gegenüber dem Druckraum 46 ist eine Verbindung des ersten Strömungsweges 82 mit der bereits erwähnten Steuervorrichtung und dem ebenfalls genannten Hydraulikflüssigkeitsvorrat erforderlich.

Fluidförmiges Medium, das über den ersten Strömungsweg 82 sowie die Strömungsdurchlässe 55 in den Versorgungsraum 44 gelangt ist, tritt zur Kühlung der Kupplungselemente 66, 68 in den Kupplungsraum 160 ein. Nach Durchgang durch die Kupplungselemente 66, 68 strömt das fluidförmige Medium, wie in Fig. 1 durch Pfeile angedeutet, zum Torsionsschwingungsdämpfer 90, um hier an dessen der Überbrückungskupplung 56 zugewandter Seite in die Öffnung 154 der Führungsschale 144 der Führungsvorrichtung 150 einzudringen. Da die Führungsschale 144 an ihrer von der Überbrückungskupplung 56 abgewandter Seite zumindest im wesentlichen als Abtrennung 152 zwischen dem Kupplungsraum 160 und dem hydrodynamischen Kreis 24 wirksam ist, verbleibt dem fluidförmigen Medium allein der Weg über die Durchgänge 156 der Ausnehmung 158. Durch entsprechende Positionierung der Durchgänge 156 in der Führungsschale 144 wird das fluidförmige Medium unmittelbar zum hydrodynamischen Kreis 24 geleitet, um dort über einen Axialspalt 168 zwischen Pumpenrad 17 und Turbinenrad 19 in den hydrodynamischen Kreis 24 einzudringen, und dadurch dessen Befüllzustand zu erhöhen. Ebenso wird fluidförmiges Medium, das den hydrodynamischen Kreis 24 über den Axialspalt 168 verlassen haben sollte, bereits vor einem Übertritt in den Kupplungsraum 160 an der dem Turbinenrad 19 zugewandten Seite der Führungsschale 144 umgelenkt, oder aber, sollte dieses fluidförmige Medium den Kupplungsraum 160 bereits erreicht haben, über die Ausnehmung 158 der Führungsschale 144 in den hydrodynamischen Kreis 24 zurückgeleitet. Damit wirkt die Führungsschale 144 der Führungsvorrichtung 150 des Torsionsschwingungsdämpfers 90 als Strömungsleiteinrichtung 170, durch welche fluidförmiges Medium in den hydrodynamischen Kreis 24 leitbar ist. Das im hydrodynamischen Kreis 24 enthaltene, fluidförmige Medium kann demnach, zumindest im wesentlichen, lediglich noch über den zweiten Strömungsweg 84 aus dem hydrodynamischen Kreis 24 wieder austreten.

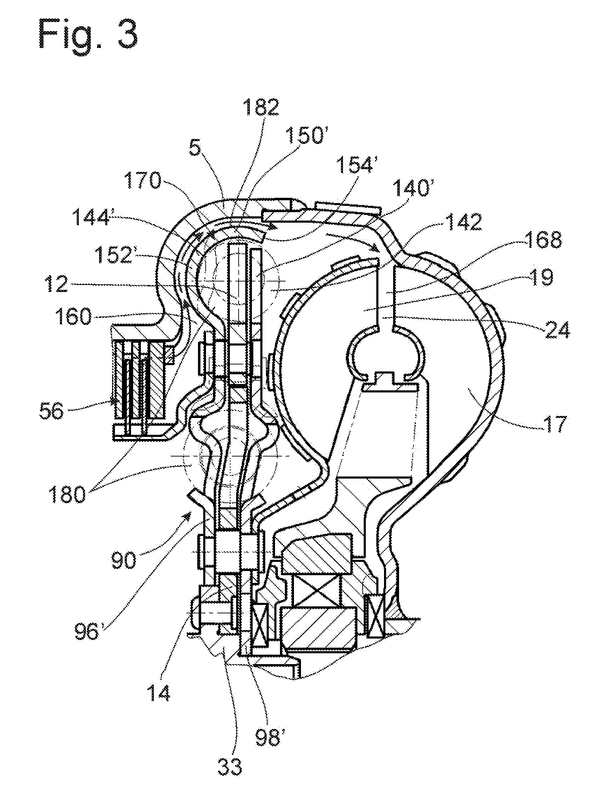

In Fig. 3 ist eine andere Ausführung der Strömungsleiteinrichtung 170 am Torsionsschwingungsdämpfer 90 dargestellt. Abweichend von der Ausführung gemäß Fig. 1 oder 2 ist das antriebsseitige Deckblech 96' des Torsionsschwingungsdämpfers 90 als Führungsschale 144' einer Führungsvorrichtung 150' für die Energiespeicher 142 des radial äußeren Umfangsfedersatzes 93 ausgebildet, während das abtriebsseitige Deckblech 98' radial außen lediglich Ansteuerelemente 140' aufweist. Die Führungsschale 144' ist hierbei derart ausgerichtet, dass ihre der Überbrückungskupplung 56 zugewandte Seite zumindest im wesentlichen als Abtrennung 152' zwischen dem Kupplungsraum 160 und dem hydrodynamischen Kreis 24 wirksam ist, während die von der Überbrückungskupplung 56 abgewandte Seite mit einer Öffnung 154' versehen ist. Bei dieser Ausführung der Strömungsleiteinrichtung 170 ist allerdings die Abtrennung 152' völlig geschlossen, so dass von der Überbrückungskupplung 58 ankommendes, fluidförmiges Medium lediglich auf einem Weg weiterströmen kann, nämlich entlang der der Überbrückungskupplung 56 zugewandten Seite der Führungsschale 144'. Diese Seite wirkt demnach im Hinblick auf das fluidförmige Medium als Leitfläche 182.

Wie aus Fig. 3 erkennbar ist, wird von der Überbrückungskupplung 56 kommendes, fluidförmiges Medium an der Leitfläche 182 der Führungsschale 144' zunächst nach radial außen und dann in Achsrichtung zum Turbinenrad 19 umgelenkt, um dann über den Axialspalt 168 zwischen Pumpenrad 17 und Turbinenrad 19 in den hydrodynamischen Kreis 24 zu gelangen.

## Patentansprüche

1. Hydrodynamische Kopplungsanordnung mit einem um eine Drehachse (3) drehbaren Kupplungsgehäuse (5), innerhalb welchem zumindest ein durch wenigstens ein Pumpenrad (17) und ein Turbinenrad (19) gebildeter hydrodynamischer Kreis (24) sowie zumindest ein Kupplungsraum (160) vorgesehen ist, der eine Überbrückungskupplung (56) sowie einen Torsionsschwingungsdämpfer (90) aufnimmt, wobei der Torsionsschwingungsdämpfer (90) an zumindest einem Teil (98, 96') über eine Führungsvorrichtung (150, 150') zur Abstützung wenigstens eines Energiespeichers (142) einer Dämpfungseinrichtung (180) nach radial außen verfügt,
**dadurch gekennzeichnet,**
**dass** die Führungsvorrichtung (150, 150') des Torsionsschwingungsdämpfers (90) als Strömungsleiteinrichtung (170) ausgebildet ist, durch welche bevorzugt im Kupplungsraum (160) enthaltenes, von der Überbrückungskupplung (56) anströmendes fluidförmiges Medium zum hydrodynamischen Kreis (24) umlenkbar ist.

2. Hydrodynamische Kopplungsanordnung nach Anspruch 1,
**dadurch gekennzeichnet,**
**dass** die Führungsvorrichtung (150, 150') des Torsionsschwingungsdämpfers (90) über zumindest eine Führungsschale (144, 144') für den wenigstens einen Energiespeicher (142) verfügt, wobei die Führungsschale (144, 144') an Ihrer von der Überbrückungskupplung (56) abgewandten Seite zumindest partiell wenigstens eine Ausnehmung (1 58) aufweist.

3. Hydrodynamische Kopplungsanordnung nach Anspruch 2,
**dadurch gekennzeichnet,**
**dass** die Führungsschale (144) des Torsionsschwingungsdämpfers (90) an ihrer der Überbrückungskupplung (56) zugewandten Seite zumindest im wesentlichen mit einer Öffnung (154) zum Eintritt von aus der Überbrückungskupplung (56) stammendem fluidförmigem Medium versehen ist, während die Führungsschale (144) aufgrund der wenigstens einen Ausnehmung (158) an ihrer von der Überbrückungskupplung (56) abgewandten Seite einen Austritt von durch die Öffnung (154) eingetretenen fluidförmiges Mediums mit Ausrichtung auf den hydrodynamischen Kreis (24) ermöglicht.

4. Hydrodynamische Kopplungsanordnung nach Anspruch 2 oder 3,
**dadurch gekennzeichnet,**
**dass** die Ausnehmung (158) über eine Mehrzahl von in Umfangsrichtung in vorbestimmten Abständen zueinander angeordneten Durchgangsgruppen (157) verfügt.

5. Hydrodynamische Kopplungsanordnung nach Anspruch 4,
**dadurch gekennzeichnet,**
**dass** jede Durchgangsgruppe (157) eine Mehrzahl von in Umfangsrichtung in vorbestimmten Abständen zueinander angeordnete Durchgänge (156) aufweist.

6. Hydrodynamische Kopplungsanordnung nach Anspruch 2,
**dadurch gekennzeichnet,**
**dass** die Führungsschale (144') des Torsionsschwingungsdämpfers (90) an ihrer der Überbrückungskupplung (56) zugewandten Seite zur Umlenkung von aus der Überbrückungskupplung (56) stammendem fluidförmigem Medium mit einer zumindest im wesentlichen geschlossenen Leitfläche (182) ausgebildet ist, die auf den hydrodynamischen Kreis (24) hin ausgerichtet ist.

7. Hydrodynamische Kopplungsanordnung nach Anspruch 6,
**dadurch gekennzeichnet,**
**dass** die zumindest im wesentlichen geschlossene Leitfläche (182) durch ein den wenigstens einen Energiespeicher (142) der Dämpfungseinrichtung (180) auf einem Teil von dessen Umfang umschließendes Deckblech (96') gebildet ist.
